# EUROPEAN PATENT APPLICATION

(11) **EP 3 376 720 A1**
(43) Date of publication of application: **19.09.2018**
(21) Application number: 17305264.8
(22) Date of filing: 13.03.2017
(51) Int. Cl.: H04L 12/841, H04L 12/801

(54) **METHOD AND TELECOMMUNICATIONS NETWORK FOR ORGANISING DATA FLOW TO SATISTY LOW LATENCY REQUIREMENTS**

(71) Applicant: Nokia Solutions and Networks Oy, 02610 Espoo (FI)
(72) Inventor: MARCE, Olivier, 91620 Nozay (FR); LECLERC, Brice, 91620 Nozay (FR)
(74) Representative: Bryers LLP

(57) **Abstract**

A method of organising data flow in a telecommunications network having two or more sending nodes each arranged to transmit data to a receiving node on a respective network path comprises the steps of determining a respective path delay for each network path and transmitting a respective data packet from each sending node to the receiving node, the data packets being transmitted at one or more transmission times determined using the path delays such that each data packet arrives at the receiving node at a respective reception time. The method allows data packets to be transmitted to a receiving node from two or more sending nodes without collision even at high data rates, thus allowing low data latency to be achieved at high data rates and providing improved latency compared to prior art techniques in which data packets are transmitted to a receiving node at randomised times.

## Description

### TECHNICAL FIELD

The invention relates generally to data transmission, particularly to transmission of data within telecommunications networks.

### BACKGROUND

In modern mobile communications networks, such as Cloud RAN (C-RAN) or 5G, the latency of data flow along a network path is of critical importance. 4G C-RAN requires an end-to-end delay of 3 ms between a remote radio head (RRH) and a baseband unit (BBU) or digital function unit. 5G defines latency constraints ranging from 1 to 10 ms, and less than 1 ms for certain specific services.

The problem of achieving low latency is multi-factorial. One important facet of the problem is to avoid collision of data packets at nodes in a network path. Such packet collision results in buffering, which in turn causes additional latency and timing jitter. It is therefore desirable to avoid any situation arising in a network path in which a data rate along the network path is reduced by packet collisions at nodes in the network path. A node could for example be any frame switching equipment, such as an L2 switch, a router, an optical switch etc.

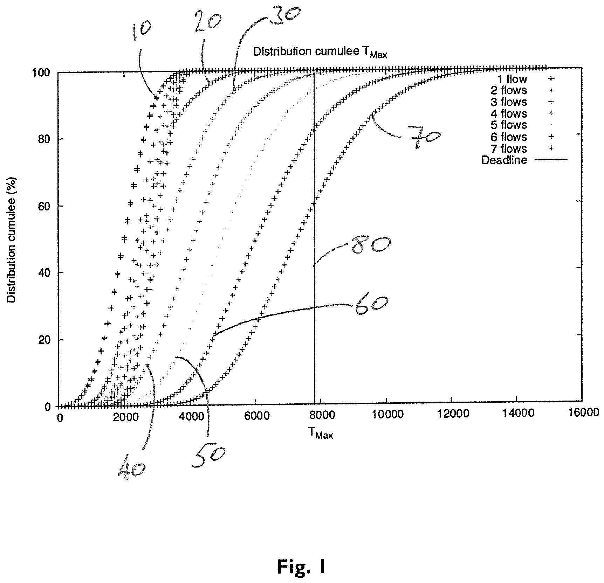

One method of avoiding packet collision at a node in a network path is to send packets from different sending nodes at randomised times, however this method has the disadvantage that the probability of packet collision at a given node increases rapidly with network load. Figure 1 shows curves 10, 20, 30, 40, 50, 60, 70 of cumulative delay for 1, 2, 3, 4, 5, 6 and 7 data flows respectively, delay being expressed in units of atomic time slots, an atomic time slot being the transmission time for a minimum amount of data which can be handled by a network (in this case 64B). Abscissa 80 corresponds to the maximum acceptable delay (the delay boundary) compatible with LTE HARDQ architecture, i.e. 3 ms end-to-end minus processing delay. Figure 1 shows that for a highly-loaded network, more than 60% of packets are delayed such they cannot meet the delay boundary. Even with half load, there are still some packets which are delayed to an unacceptable extent. In addition, overprovisioning associated with this method results in wasted bandwidth.

### SUMMARY

According to a first aspect of the present invention, there is provided a method of organising data flow in a telecommunications network having two or more sending nodes each arranged to transmit data to a receiving node on a respective network path, the method comprising the steps of determining a respective path delay for each network path and transmitting a respective data packet from each sending node to the receiving node, the data packets being transmitted at one or more transmission times determined using the path delays such that each data packet arrives at the receiving node at a respective reception time.

A method of the invention substantially avoids collision of data packets at the receiving node under high load conditions, thus improving data latency under high load conditions compared to methods of the prior art in which data packets are transmitted from sending nodes at randomised times.

In some embodiments the path delays may be determined with limited accuracy so that each path delay is determined to lie within a respective range of possible values defining a respective path delay interval, the data packets being transmitted such that each data packet is received at the receiving node within a discrete respective reception time interval. The use of hardware which determines the path delays with limited accuracy can thereby be accommodated if required.

The data packets may be transmitted at the one or more transmission times in response to reception of control signals at the sending nodes. The control signals may be generated by a controller, for example a software-defined network (SDN) controller.

In some embodiments, data is processed at the sending nodes at one or more processing times in order to generate the data packets at one or more transmission times.

According to a second aspect of the present invention, there is provided a telecommunications network comprising two or more sending nodes each connected to a receiving node by a respective network path, the network further comprising a controller arranged to determine a respective path delay for each network path and to control the sending nodes such that each sending node transmits a respective data packet to the receiving node, the data packets being transmitted at one or more transmission times determined by the controller using the path delays such that each data packet arrives at the receiving node at a respective reception time.

The controller may be arranged to determine a respective range of possible values for each path delay, each range defining a respective path delay interval, and to control transmission of the data packets from the sending nodes such that each data packet is received at the receiving node within a discrete respective reception time interval.

The sending nodes may be arranged to transmit the data packets at one or more transmission times in response to reception of control signals at the sending nodes. The controller may be arranged to generate the control signals and to output the control signals to the sending nodes.

The sending nodes may be arranged to receive data and to process the data at one or more processing times to generate the data packets.

A third aspect of the invention provides a computer program for carrying out a method of the invention within a telecommunications network having two or more sending nodes each arranged to transmit data to a receiving node on a respective network path.

A fourth aspect of the invention provides a controller for a telecommunications network, the network having two or more sending nodes each arranged to transmit data to a receiving node on a respective path, wherein the controller is programmed or otherwise arranged to carry out a method of the invention. The controller may be a software-defined network (SDN) controller.

### BRIEF DESCRIPTION OF THE DRAWINGS

Embodiments will now be described, by way of example only, with reference to the accompanying drawings, in which:
- Figure I: shows curves of cumulative delay for data packets in a network for various numbers of data flows passing to a node, data packets in the network being transmitted at randomised times; and

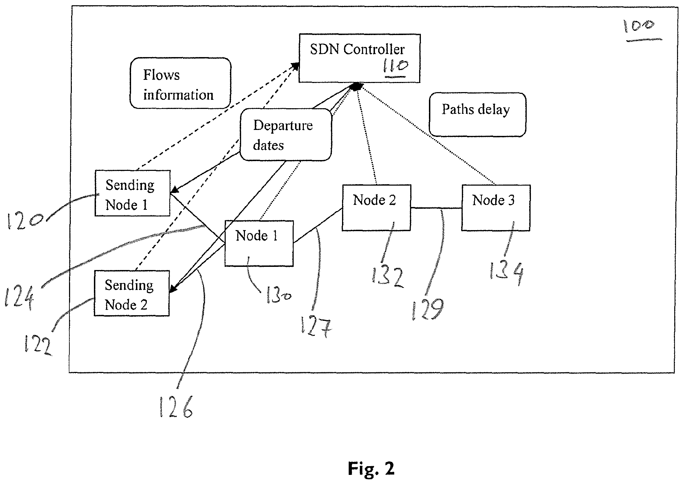

- Figure 2: schematically illustrates a telecommunications network according to the present invention.

### DESCRIPTION

Example embodiments are described below in sufficient detail to enable those of ordinary skill in the art to embody and implement the systems and processes herein described. It is important to understand that embodiments can be provided in many alternate forms and should not be construed as limited to the examples set forth herein.

Accordingly, while embodiments can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

The terminology used herein to describe embodiments is not intended to limit the scope. The articles "a," "an," and "the" are singular in that they have a single referent, however the use of the singular form in the present document should not preclude the presence of more than one referent. In other words, elements referred to in the singular can number one or more, unless the context clearly indicates otherwise. It will be further understood that the terms "comprises," "comprising," "includes," and/or "including," when used herein, specify the presence of stated features, items, steps, operations, elements, and/or components, but do not preclude the presence or addition of one or more other features, items, steps, operations, elements, components, and/or groups thereof.

Unless otherwise defined, all terms (including technical and scientific terms) used herein are to be interpreted as is customary in the art. It will be further understood that terms in common usage should also be interpreted as is customary in the relevant art and not in an idealized or overly formal sense unless expressly so defined herein.

Referring to Figure 2, a telecommunications network of the invention is indicated generally by 100. Data packets from sending nodes 120, 122 are transmitted to a first node 130 via paths 124 and 126 respectively and subsequently to second and third nodes 132, 134 via paths 127, 129. An SDN network controller 110 is programmed or otherwise arranged to determine path delays for the paths 124, 126, in other words the time taken for a data packet to reach node 130 from sending node 120 via the path 124, and the time taken for a data packet to reach node 130 from sending node 122 via path 126.

One method which can be used to determine the path delays is described in the memo "A One-Way Loss Metric for IP Performance Metrics (IPPM)" by the Internet Engineering Task Force (IETF), https://tools.ietf.org/html/rfc7680. This method allows for determination of path delays with low accuracy, however it can be augmented if required to allow more precise measurements, for example by the use of more precise clocks or by use of Ethernet frames. In the case of low-accuracy measurements, a "guard time" may be provisioned around the time that a data packet is received by one of the nodes 130, 132, 134 so that data packets from the sending nodes 120, 122 do not collide at any of the nodes 130, 132, 134. In this case, the path delays associated with the network paths 124, 126 are each determined to lie within a respective range of possible values, i.e. they are determined with limited or relatively low accuracy, and the data packets may be transmitted from the sending nodes 120, 122 to ensure that the earliest possible arrival time of a data packet from one sending node is later than the latest possible arrival time of a data packet from the other sending node. The data packets from the sending nodes 120, 122 thus arrive at the node 130, 132, 134 in respective reception time intervals which are resolved and discrete, thus avoiding collision of data packets from respective sending nodes 120, 122, even though the path delays associated with network paths 124, 126 are not known accurately. The duration of a reception time interval in which a data packet is received at any of the nodes 130, 132, 134 is equal to the range of values of path delay determined for the corresponding network path.

The SDN controller 110 generates control signals which correspond to the determined path delays, the control signals being passed to the sending nodes 120, 122. The sending nodes 120, 122 transmit data packets at one or more times in response to the control signals so that the data packets arrive at node 130 at respective times, i.e. such that the data packets do not collide at node 130. In an alternative embodiment, sending nodes 120, 122 process data to generate the data packets and subsequently transmit the data packets to node 130 under control of the SDN controller 110. In this case, the SDN controller operates to pass control signals to the sending nodes so that the sending nodes commence processing the input data to generate data packets which are then transmitted at one or more transmission times such that they arrive at node 130 without collision.

The SDN controller 110 is programmed to determine path delays for the path 124, 126 by means of an algorithm of relatively low complexity which can be run each time that the flows of data from sending nodes 120, 122 change in some way, for example when a sending node sends a new data flow, stops transmission of a data flow, or if a data flow changes in one or more characteristics (e.g. packet size, time interval between packets etc.) or each time that delays in the network 100 change in some way, for example when a path is removed or added, or delay characteristics change. The algorithm may be a so-called "brute force" algorithm or a heuristic-type algorithm.

The present inventions can be embodied in other specific apparatus and/or methods. The described embodiments are to be considered in all respects as illustrative and not restrictive. In particular, the scope of the invention is indicated by the appended claims rather than by the description and figures herein. All changes that come within the meaning and range of equivalency of the claims are to be embraced within their scope.

## Claims

1. A method of organising data flow in a telecommunications network having two or more sending nodes each arranged to transmit data to a receiving node on a respective network path, the method comprising the steps of:
determining a respective path delay for each network path; and
transmitting a respective data packet from each sending node to the receiving node;
the data packets being transmitted at one or more transmission times determined using the path delays such that each data packet arrives at the receiving node at a respective reception time.

2. A method according to claim 1 wherein each path delay is determined to lie within a respective range of possible values defining a respective path delay interval and wherein the data packets are transmitted such that each data packet is received at the receiving node within a discrete respective reception time interval.

3. A method according to claim 1 or claim 2 wherein the data packets are transmitted at the one or more transmission times in response to reception of control signals at the sending nodes.

4. A method according to claim 3 wherein the control signals are generated by a controller.

5. A method according to claim 3 wherein the control signals are generated by an SDN controller.

6. A method according to any preceding claim wherein data is processed at the sending nodes at one or more processing times to generate the data packets at one or more transmission times.

7. A telecommunications network comprising two or more sending nodes each connected to a receiving node by a respective network path, the network further comprising a controller arranged to determine a respective path delay for each network path and to control the sending nodes such that each sending node transmits a respective data packet to the receiving node, the data packets being transmitted at one or more transmission times determined by the controller using the path delays such that each data packet arrives at the receiving node at a respective reception time.

8. A telecommunications network according to claim 7 wherein the controller is arranged to determine a respective range of possible values for each path delay, each range defining a respective path delay interval, and to control transmission of the data packets from the sending nodes such that each data packet is received at the receiving node within a discrete respective reception time interval.

9. A telecommunications network according to claim 7 or claim 8 wherein the sending nodes are arranged to transmit the data packets at the one or more transmission times in response to reception of control signals at the sending nodes.

10. A telecommunications network according to claim 9 wherein the controller is arranged to generate the control signals and to output the control signals to the sending nodes.

11. A telecommunications network according to any of claims 7 to 10 wherein the sending nodes are arranged to receive data and to process the data at one or more processing times to generate the data packets.

12. A computer program for carrying out a method according to any of claims 1 to 5 within a telecommunications network having two or more sending nodes each arranged to transmit data to a receiving node on a respective network path.

13. A controller for a telecommunications network, the network having two or more sending nodes each arranged to transmit data to a receiving node on a respective network path, wherein the controller is programmed or otherwise arranged to carry out a method according to any of claims 1 to 5.

14. A controller according to claim 13, wherein the controller is an SDN controller.
